# EUROPEAN PATENT APPLICATION

(11) **EP 4 546 678 A1**
(43) Date of publication of application: **30.04.2025**
(21) Application number: 23826803.1
(22) Date of filing: 27.04.2023
(51) Int. Cl.: H04L 1/00, H04L 1/08, H04W 4/42, H04W 28/18

(54) **RADIO COMMUNICATION SYSTEM, RADIO COMMUNICATION METHOD, AND COMMUNICATION CONTROL SYSTEM**

(30) Priority: 24.06.2022 JP 2022102182
(71) Applicant: Hitachi, Ltd., Tokyo 100-8280 (JP)
(72) Inventor: ICHIKAWA, Shun, Tokyo 100-8280 (JP); OOMI, Taishi, Tokyo 100-8280 (JP); OOKURA, Yoshinori, Tokyo 100-8280 (JP)
(74) Representative: MERH-IP Matias Erny Reichl Hoffmann Patentanwälte PartG mbB
(86) International application number: PCT/JP2023/016622
(87) International publication number: WO 2023/248614

(57) **Abstract**

A wireless communication system includes: a communication requirement management unit 301 configured to set, when wireless communication is performed between two parties at least one of which is a moving object, the number of times of repetition of transmission for each of security information and non-security information that is information other than the security information, according to quality of the wireless communication; and a wireless control unit 302 configured to control the wireless communication according to the set number of times of repetition. Accordingly, it is possible to provide a wireless communication system, a wireless communication method, and a communication control system that can perform wireless communication for both security information and non-security information and can ensure stable wireless communication for the security information.

## Description

### Technical Field

The present invention relates to a wireless communication system, a wireless communication method, and a communication control system. In particular, the invention relates to a wireless communication system, a wireless communication method, and a communication control system suitable for performing wireless communication including security information and non-security information between two parties at least one of which is a moving object.

### Background Art

In recent years, for example, a system that transmits security information between railway trackside equipment and onboard equipment using wireless communication has been used. It is also conceivable to perform communication of non-security information such as audio information or video information using wireless communication.

PTL 1 discloses a wireless communication system. In this wireless communication system, trains travel on the same route. The route is divided into a plurality of sections. In a case where a reception level changes in each section when data transmitted by a mobile station mounted on a train at fixed transmission rate is received by a higher-level station, the reception level is set in four stages from A to D based on the number of times of retransmission. Here, A corresponds to a case where the reception level is highest (the number of times of retransmission is zero), and D corresponds to a case where the reception level is lowest (the number of times of retransmission is large). The transmission rate is set to S1 when the reception level is A, S2 when the reception level is B, S3 when the reception level is C, and S4 when the reception level is D (S1 > S2 > S3 > S4).

PTL 2 discloses a data distribution method. In this data distribution method, based on train operation information, a wireless base station starts to transmit a beacon, as a mobile station mounted on a train enters a communicable area of the wireless base station, to detect the entry of the mobile station, and a file transmission operation is performed using a timer only while the mobile station is in the communicable area, thereby preventing a wasteful operation of the wireless base station and wasteful channel usage. The wireless base station also checks a radio condition before the beacon is transmitted, and when a default channel is congested, the wireless base station sets a vacant channel as a channel to be used, notifies the mobile station of the channel to be used using the default channel immediately after the entry into the communicable area, and then performs file transmission with the channel to be used, thereby further improving transmission efficiency.

### Citation List

### Patent Literature

PTL 1: JP2020-108009A
PTL 2: JP2005-20365A

### Summary of Invention

### Technical Problem

However, there is a situation in which communication resources are insufficient due to traffic congestion or radio quality degradation in a communication network. In this case, not only non-security information, which is not security information, but also security information may not be communicated normally.

An object of the invention is to provide a wireless communication system, a wireless communication method, and a communication control system that can perform wireless communication for both security information and non-security information and can ensure stable wireless communication for the security information.

### Solution to Problem

In order to solve the above problems, the invention provides a wireless communication system including: a setting unit configured to set, when wireless communication is performed between two parties at least one of which is a moving object, the number of times of repetition of transmission for each of security information and non-security information that is information other than the security information, according to quality of the wireless communication; and a control unit configured to control the wireless communication according to the set number of times of repetition.

Here, when the quality of the wireless communication degrades, the setting unit may set the number of times of repetition for each of types of the security information and the non-security information according to a priority determined based on the corresponding type. In this case, the number of times of repetition may be set according to importance of information.

When the quality of the wireless communication degrades, the setting unit may set the number of times of repetition for the security information to be larger than the number of times of repetition for the non-security information. In this case, the number of times of repetition may be increased for the security information that is more important than the non-security information.

Further, when the quality of the wireless communication degrades, the setting unit may increase the number of times of repetition for the security information. In this case, the number of times of repetition may be increased for the security information that is more important information.

Furthermore, when the quality of the wireless communication does not reach a predetermined level, the setting unit may further increase the predetermined number of times of repetition. In this case, more stable wireless communication may be ensured for the security information that is more important information.

When the quality of the wireless communication degrades, the setting unit may decrease the number of times of repetition for the non-security information. In this case, consumption of communication resources for the non-security information having lower importance can be reduced.

When the quality of the wireless communication is restored to a predetermined level, the setting unit may return the number of times of repetition of the transmission for each of the security information and the non-security information to a predetermined initial number of times. In this case, wireless communication can be performed while handling both security information and non-security information.

Further, the number of times of repetition may be an upper limit number of times of continuous transmission or retransmission. In this case, wireless communication is more easily controlled.

The quality of the wireless communication may be determined based on at least one of reception quality of the wireless communication and communication congestion. The quality of the wireless communication can be more easily determined.

Further, the reception quality may be estimated based on a relationship between reference signal received power (RSRP) and a signal to interference and noise power ratio (SINR). In this case, the reception quality can be determined more accurately.

Furthermore, at least one of the RSRP and the SINR may be acquired from at least one of a wireless base station and a wireless terminal. In this case, the RSRP and the SINR can be more easily acquired.

The communication congestion may be estimated based on a relationship between a transmission delay time and an estimated value of trackside population. In this case, the communication congestion can be more accurately determined.

The transmission delay time may be acquired from application software for the moving object. In this case, the transmission delay time can be more easily acquired.

The invention also provides a wireless communication method including: a setting unit configured to set, when wireless communication is performed between two parties at least one of which is a moving object, the number of times of repetition of transmission for each of security information and non-security information that is information other than the security information, according to quality of the wireless communication; and a control unit configured to control the wireless communication according to the set number of times of repetition.

Further, the invention provides a communication control system for performing wireless communication between two parties at least one of which is a moving object, in which at least one of the two parties includes a setting unit configured to set the number of times of repetition of transmission for each of security information and non-security information that is information other than the security information, according to quality of the wireless communication, and a control unit configured to control the wireless communication according to the set number of times of repetition.

### Advantageous Effects of Invention

According to the invention, it is possible to provide a wireless communication system, a wireless communication method, and a communication control system that can perform wireless communication for both security information and non-security information and can ensure stable wireless communication for the security information.

### Brief Description of Drawings

[FIG. 1] FIG. 1 is a conceptual diagram showing an overall configuration of a communication control system according to an embodiment.
[FIG. 2] FIG. 2 shows a state in which quality of wireless communication is low.
[FIG. 3] FIG. 3 shows a state in which the quality of the wireless communication is low.
[FIG. 4] FIG. 4 shows a first example of a functional configuration and a processing flow of the wireless communication system.
[FIG. 5] FIG. 5 shows a second example of the functional configuration and the processing flow of the wireless communication system.
[FIG. 6] FIG. 6 shows a third example of the functional configuration and the processing flow of the wireless communication system.
[FIG. 7] FIG. 7 shows a fourth example of the functional configuration and the processing flow of the wireless communication system.
[FIG. 8] FIG. 8 shows a method for determining reception quality in a communication quality determination unit.
[FIG. 9] FIG. 9 shows a method for determining communication congestion in the communication quality determination unit.
[FIG. 10] FIG. 10 shows control in a case where a communication quality determination result is in two stages of "low and normal".
[FIG. 11] FIG. 11 shows control in a case where the communication quality determination result is in N stages of "levels 1, 2,..., N".
[FIG. 12] FIG. 12 shows a data structure of a communication requirement management unit when the communication quality determination result is in the two stages of "low and normal" and wireless communication control is performed.
[FIG. 13] FIG. 13 shows the data structure of the communication requirement management unit when the communication quality determination result is in the N stages of "levels 1, 2,..., N" and wireless communication control is performed.
[FIG. 14] FIG. 14 shows a control flow in a case where the number of times of repetition of application communication is dynamically changed in a configuration in which communication quality is estimated based on a parameter acquired from a railway application.

### Description of Embodiments

Hereinafter, an embodiment of the invention will be described in detail with reference to the drawings.

### <Description of Overall Configuration of Communication Control System S>

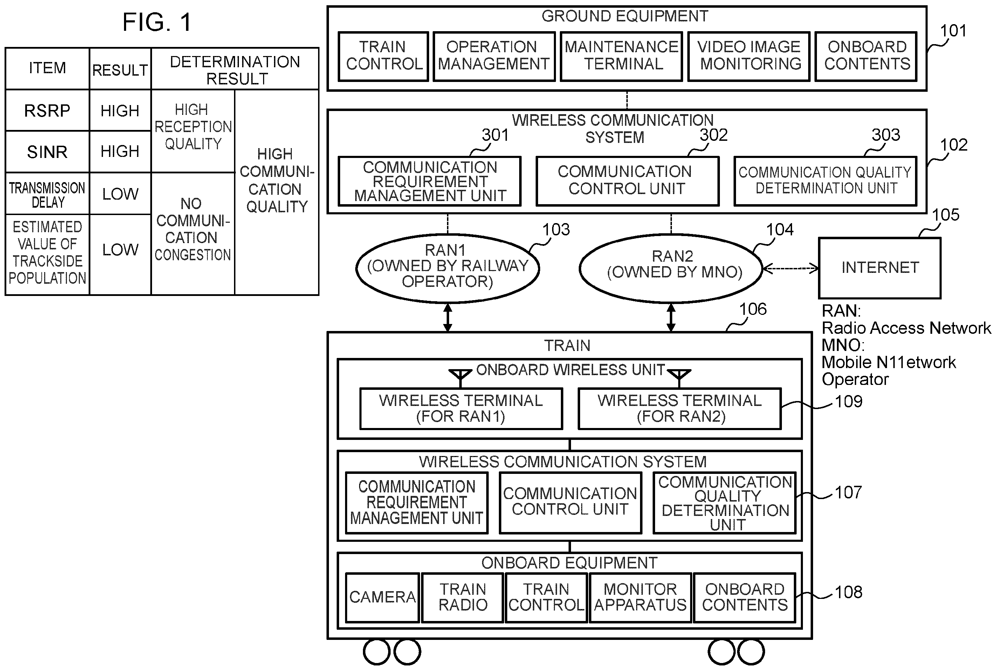

FIG. 1 is a conceptual diagram showing an overall configuration of a communication control system S according to the embodiment.

The communication control system S includes ground equipment 101 that is communication equipment provided on ground, wireless communication systems 102 and 107 that perform wireless communication, and onboard equipment 108 mounted on a train 106.

The ground equipment 101 is communication equipment provided on the ground to handle wireless communication with the train 106 that is an example of a moving object. The ground equipment 101 is provided, for example, at an operation command center that issues a command for an operation of the train 106. For example, the ground equipment 101 is provided at a trackside facility disposed along a track of the train 106 in order to control the operation of the train 106. Here, the ground equipment 101 transmits and receives security information and non-security information to and from the train 106.

The "security information" is information necessary for operating a moving object such as the train 106. Examples of the security information include train position information, train control information including any of a speed limit and a stop limit point, a camera image to be used during a remote operation, and voice call information used as a substitute for train radio. The "non-security information" is information other than the security information. An example of the non-security information is onboard content information distributed to a passenger aboard the train 106.

As shown in FIG. 1, the ground equipment 101 performs train control and operation management for the train 106. The ground equipment 101 implements a function of a maintenance terminal. Further, the ground equipment 101 monitors a video image captured using a camera provided at the train 106, and transmits onboard contents provided by the train 106.

The wireless communication system is mounted on at least one of the ground equipment 101 and the onboard equipment 108 and is connected thereto. In FIG. 1, the wireless communication system is mounted on both the ground equipment 101 and the onboard equipment 108. That is, as shown in the drawing, the wireless communication system 102 is disposed on the ground equipment 101 side, and the wireless communication system 107 is disposed on the onboard equipment 108 side as wireless communication systems.

The wireless communication system 102 is connected to the ground equipment 101 and performs wireless communication with the onboard equipment 108 via a radio access network (RAN). The wireless communication system 107 is connected to the onboard equipment 108 and performs wireless communication with the ground equipment 101 via the radio access network and an onboard control unit 109.

Here, a case is shown in which a RAN 103 (also shown as RAN1) that is a private RAN or a RAN 104 (also shown as RAN2) that is a public RAN operated by an external communication carrier is used as the radio access network. The RAN 103 that is the private RAN is, for example, a communication network owned by a railway operator that operates the train 106. The RAN 104 that is the public RAN is, for example, a communication network owned by a mobile network operator (MNO), and is also connected to the Internet 105. By using this communication network, a mobile communication operator provides a service such as a fourth generation mobile communication system (4G), a fifth generation mobile communication system (5G), or a long term evolution (LTE) communication system.

The RAN 103 or the RAN 104 is connected to the wireless communication system 102. When the train 106 enters a communication coverage area of the RAN 103 or the RAN 104, the RAN 103 or the RAN 104 is connected to the wireless communication system 107 mounted on the train 106. Accordingly, the ground equipment 101 or the onboard equipment 108 uses the wireless communication system 102 and the wireless communication system 107, and performs mutual communication via the RAN 103 or the RAN 104.

The onboard control unit 109 includes a wireless terminal used for performing wireless communication. Here, the wireless terminal includes a wireless terminal for the RAN1 and a wireless terminal for the RAN2.

The onboard equipment 108 is mounted on the train 106 and controls equipment in the train 106. Here, the onboard equipment 108 includes a camera that is used during a remote operation to capture an image in a traveling direction of the train 106, and a train wireless apparatus that is a wireless apparatus for the train. The onboard equipment 108 includes a train control apparatus such as an automatic train operation (ATO) or automatic train control (ATC). Further, the onboard equipment 108 includes a monitor apparatus for displaying, monitoring, and controlling states of various types of equipment, and an onboard content apparatus for providing contents in the train 106.

### <Description of Wireless Communication Systems 102 and 107>

Next, the wireless communication systems 102 and 107 will be described in more detail. The wireless communication system 102 and the wireless communication system 107 have the same configuration. Therefore, in the following description, the wireless communication system 102 will be described as an example.

The wireless communication system 102 includes a communication requirement management unit 301 that manages a wireless communication condition, a communication control unit 302 that controls wireless communication, and a communication quality determination unit 303 that determines communication quality.

As will be described in detail later, the communication requirement management unit 301 retains a relationship between communication application information, which is information on a communication application that operates using wireless communication, and the number of times of repetition of transmission. In the embodiment, the number of times of repetition of transmission is the upper limit number of times of continuous transmission or retransmission. In the embodiment, the communication requirement management unit 301 is an example of a setting unit that sets the number of times of repetition of transmission for each of the security information and the non-security information according to quality of wireless communication. A specific method therefor will be described later.

The communication control unit 302 controls wireless communication. More specifically, the communication control unit 302 performs packet communication control for the communication application. The communication control unit 302 is an example of a control unit that controls wireless communication according to the set number of times of repetition.

The communication quality determination unit 303 determines the quality of wireless communication. The communication quality determination unit 303 determines the quality of wireless communication based on at least one of reception quality of wireless communication and communication congestion.

The communication quality determination unit 303 estimates the reception quality based on a relationship between reference signal received power (RSRP) and a signal to interference and noise power ratio (SINR) acquired from the RAN 103 or the RAN 104. The RSRP is intensity of radio waves received by the wireless communication systems 102 and 107. High (large) RSRP indicates strong radio wave intensity and favorable reception quality. On the other hand, low (small) RSRP indicates weak radio wave intensity and poor reception quality. Meanwhile, the SINR is a parameter indicating a power ratio of usable signals to noise-containing wireless signals received by the wireless communication systems 102 and 107. High (large) SINR indicates a favorable communication environment, and on the other hand, low (small) SINR indicates a poor communication environment.

The communication quality determination unit 303 estimates the communication congestion based on a relationship between a transmission delay time and an estimated value of trackside population. A high (large) transmission delay time indicates that there is communication congestion, and on the other hand, a low (small) transmission delay time indicates that there is no communication congestion. A high (large) estimated value of trackside population indicates that there is communication congestion, and on the other hand, a low (small) estimated value of trackside population indicates that there is no communication congestion.

The communication quality determination unit 303 determines communication quality based on various parameters of a communication path, and notifies the communication control unit 302 of a communication quality determination result. The communication control unit 302 cross-references the communication requirement management unit 301 based on the communication quality determination result. The communication control unit 302 performs communication control based on the determination result of the communication quality determination unit 303 and a result of the cross-reference of the communication requirement management unit 301.

FIG. 1 shows a state in which the quality of wireless communication is high.

FIG. 1 shows a case where the reception quality and the communication congestion are both favorable and the communication quality is high. In this case, the communication quality determination unit 303 determines "reception quality: high" and "communication congestion: no", and outputs a determination result of "communication quality: high" based on such results.

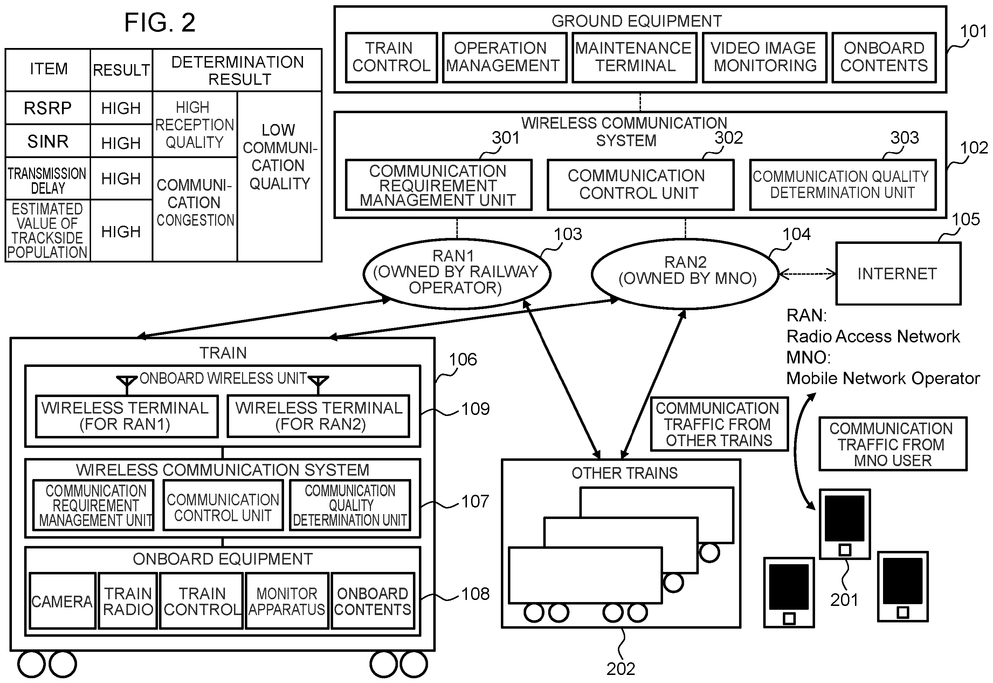

FIG. 2 shows a state in which the quality of wireless communication is low.

FIG. 2 shows a case where the reception quality is favorable whereas the communication quality is low due to communication congestion caused by a rush hour. Here, a user terminal (a mobile phone, a smartphone, or the like) 201 of a general carrier user is connected to the RAN 104, and a large amount of communication traffic is generated. Communication traffic from other trains 202 also increases due to an increase in the number of trains caused by the rush hour.

In this case, the communication quality determination unit 303 determines "reception quality: high" for the reception quality, and determines "communication congestion: yes" for the communication congestion. Based on such results, the communication quality determination unit 303 outputs a determination result of "communication quality: low".

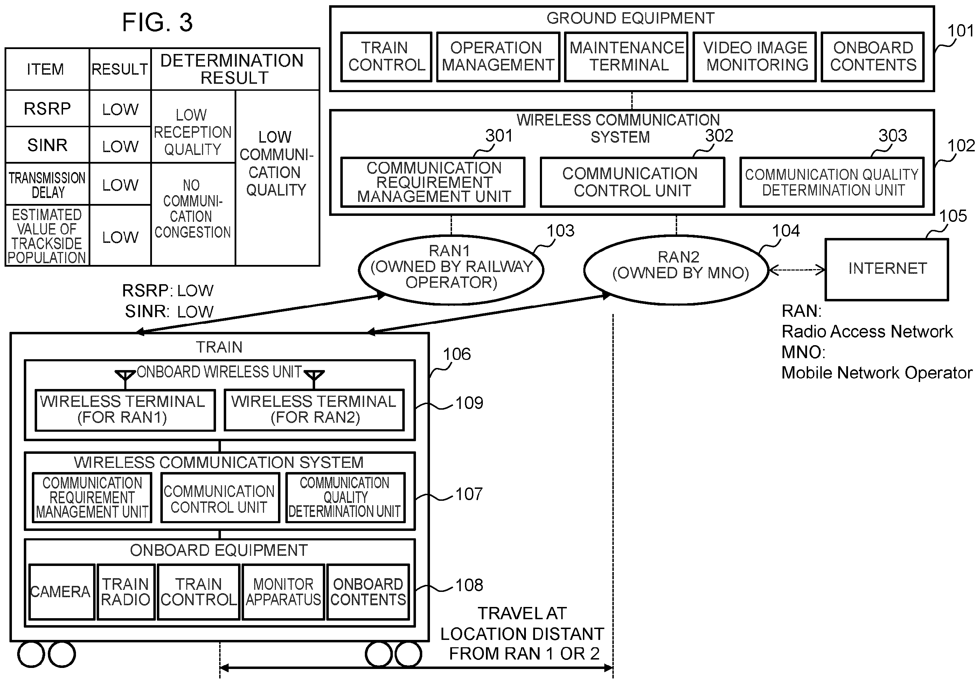

FIG. 3 shows a state in which the quality of wireless communication is low.

FIG. 3 shows a case where the train 106 arrives at the vicinity of the communication coverage area of the RAN 103 or the RAN 104 and the reception quality from the RAN 103 or the RAN 104 deteriorates.

In this case, the communication quality determination unit 303 detects that the reception quality is lower than usual, and determines "reception quality: low". Meanwhile, "communication congestion: no" is determined for the communication congestion. Based on such results, the communication quality determination unit 303 outputs the determination result of "communication quality: low".

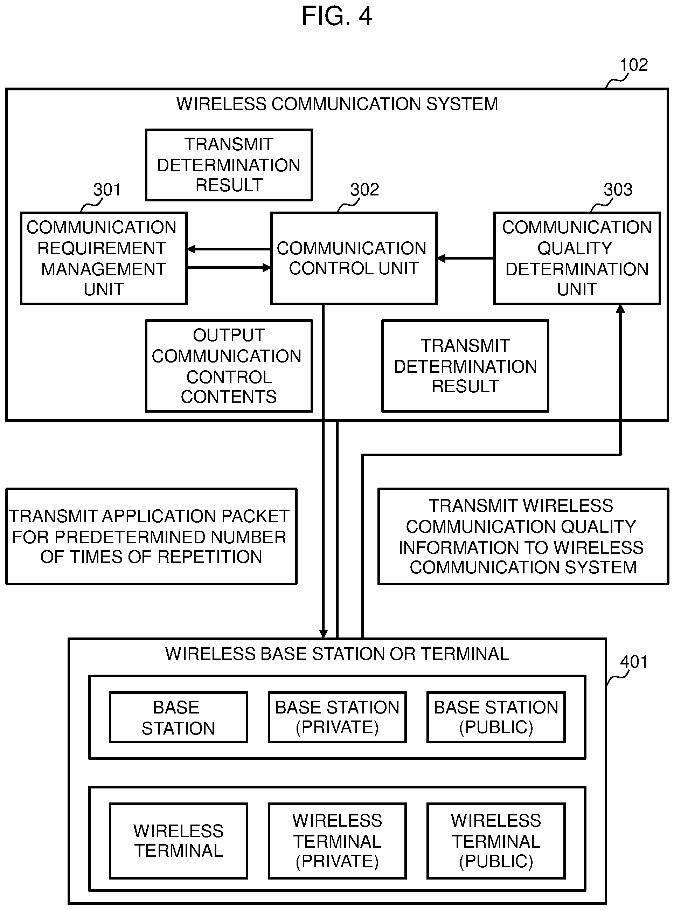

FIG. 4 shows a first example of a functional configuration and a processing flow of the wireless communication system 102.

The communication quality determination unit 303 of the wireless communication system 102 can acquire at least a parameter of the communication path such as the RSRP and the SINR from a wireless base station or wireless terminal 401 constituting the RAN 103 or the RAN 104 in FIG. **1****.**

The communication control unit 302 transmits an application packet for a predetermined number of times of repetition to the wireless base station or wireless terminal 401. Then, the communication quality determination unit 303 receives various parameters of the communication path as wireless communication quality information from the wireless base station or wireless terminal 401. Then, the communication quality determination unit 303 estimates the communication quality based on the various parameters of the communication path from the wireless base station or wireless terminal 401, and transmits a determination result to the communication control unit 302. The communication control unit 302 cross-references the communication requirement management unit 301 based on the determination result of the communication quality, and acquires information on the number of times of repetition of transmission according to the communication quality from the communication requirement management unit 301. Accordingly, the communication control unit 302 performs continuous transmission control or retransmission control.

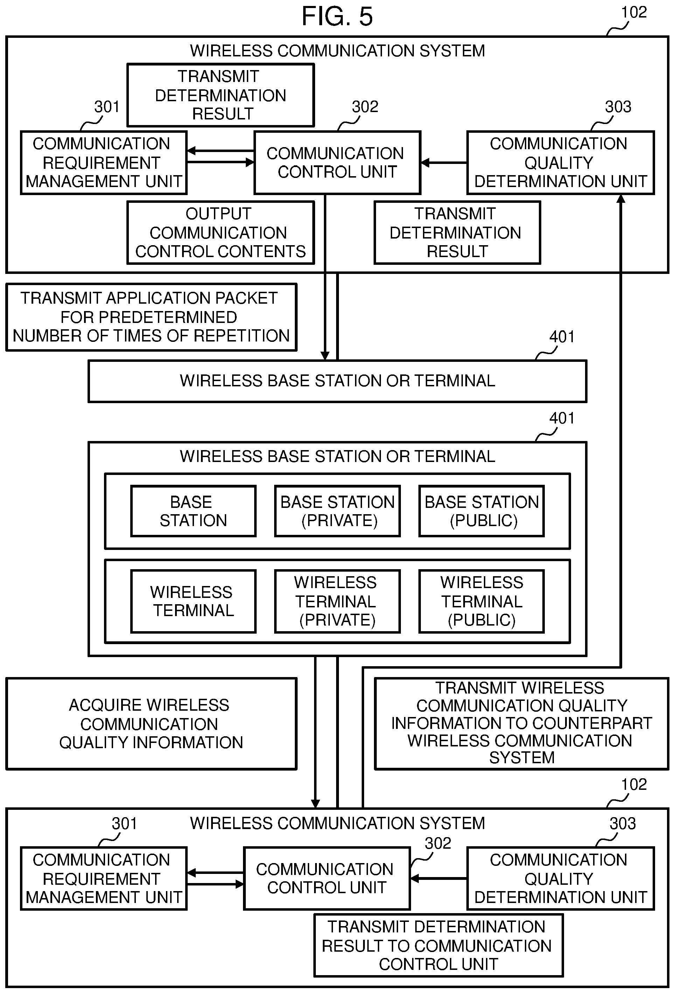

FIG. 5 shows a second example of the functional configuration and the processing flow of the wireless communication system.

The communication quality determination unit 303 of the wireless communication system 102 can acquire at least the parameter of the communication path such as the RSRP and the SINR from the wireless base station or wireless terminal 401 constituting the RAN 103 or the AN 104 in FIG. 1.

The wireless communication system 102 (the wireless communication system 102 shown on an upper side in the drawing) that is a transmission source can acquire the parameter of the communication path from the wireless base station or wireless terminal 401 (the wireless terminal 401 shown on a lower side in the drawing) connected to a counterpart wireless communication system 102 (the wireless communication system 102 shown on the lower side in the drawing) via the RANs 103 and 104 in FIG. 1.

This parameter is used for the determination of the communication quality in the communication quality determination unit 303 constituting the wireless communication system 102 that is the transmission source. The communication quality determination unit 303 estimates the communication quality based on the parameter of the communication path acquired via the counterpart wireless communication system 102, and transmits a determination result to the communication control unit 302. The communication control unit 302 cross-references the communication requirement management unit 301 based on the determination result of the communication quality, and acquires the information on the number of times of repetition of transmission according to the communication quality from the communication requirement management unit 301. Accordingly, the communication control unit 302 performs continuous transmission control or retransmission control.

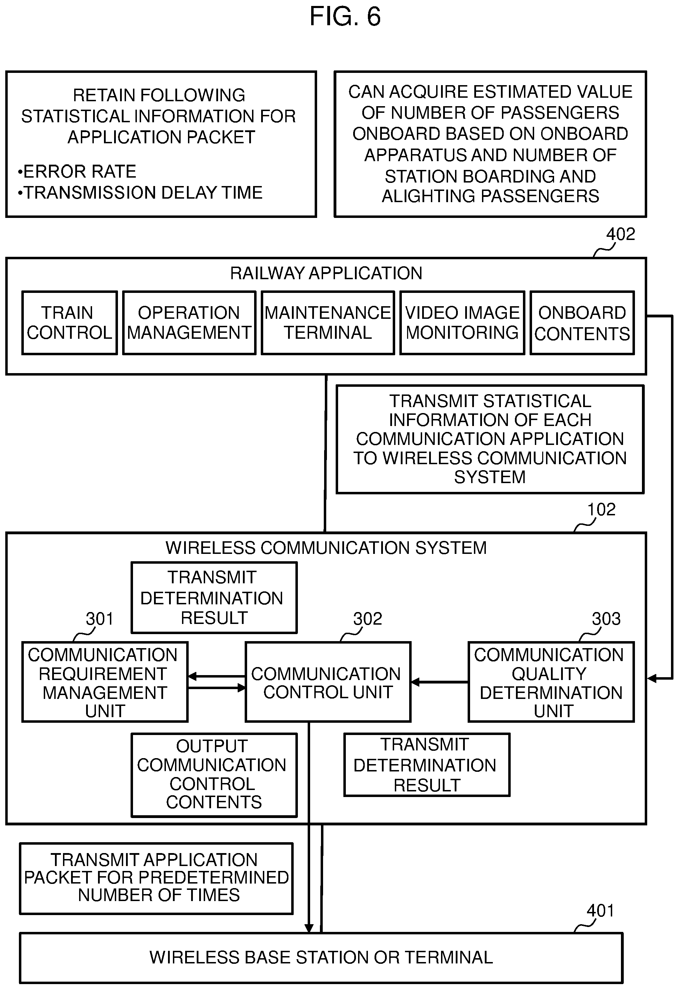

FIG. 6 shows a third example of the functional configuration and the processing flow of the wireless communication system.

The communication quality determination unit 303 of the wireless communication system 102 can acquire a parameter including any of error rate and the transmission delay time, which is statistical information of application communication, from a railway application (application software for the moving object) 402. The communication quality determination unit 303 can also acquire a parameter including any of an onboard apparatus and the number of station boarding and alighting passengers from the railway application 402.

The communication quality determination unit 303 estimates the communication quality based on the parameter acquired from the railway application 402, and transmits a determination result to the communication control unit 302. The communication control unit 302 cross-references the communication requirement management unit 301 based on the determination result of the communication quality, and acquires the information on the number of times of transmission according to the communication quality from the communication requirement management unit 301. Accordingly, the communication control unit 302 performs continuous transmission control or retransmission control.

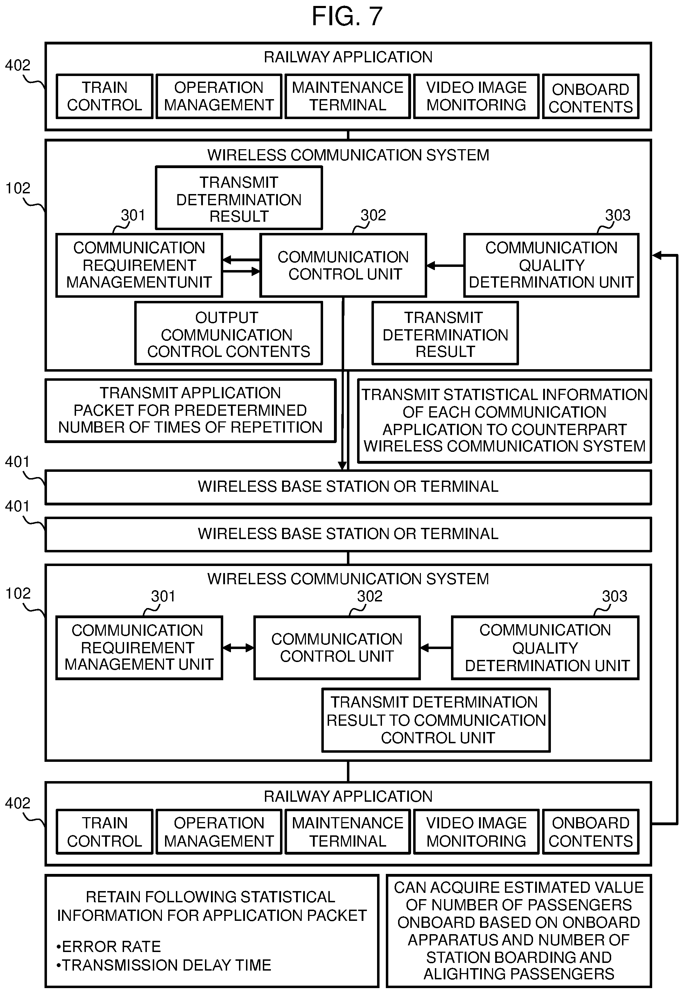

FIG. 7 shows a fourth example of the functional configuration and the processing flow of the wireless communication system.

The communication quality determination unit 303 of the wireless communication system 102 can acquire a parameter including any of the error rate or the transmission delay time, which is statistical information of application communication, from the railway application 402 (the railway application 402 shown on a lower side in the drawing) connected to the counterpart wireless communication system 102 (the wireless communication system 102 shown on the lower side in the drawing). The communication quality determination unit 303 can also acquire a parameter including any of an onboard apparatus and the number of station boarding and alighting passengers from the railway application 402 connected to the counterpart wireless communication system 102.

This parameter is used for the determination of the communication quality in the communication quality determination unit 303 constituting the wireless communication system 102 that is the transmission source. The communication quality determination unit 303 estimates the determination of the communication quality based on the acquired parameter, and transmits a determination result to the communication control unit 302. The communication control unit 302 cross-references the communication requirement management unit 301 based on the determination result of the communication quality, and acquires the information on the number of times of repetition of transmission according to the communication quality from the communication requirement management unit 301. Accordingly, the communication control unit 302 performs continuous transmission control or retransmission control.

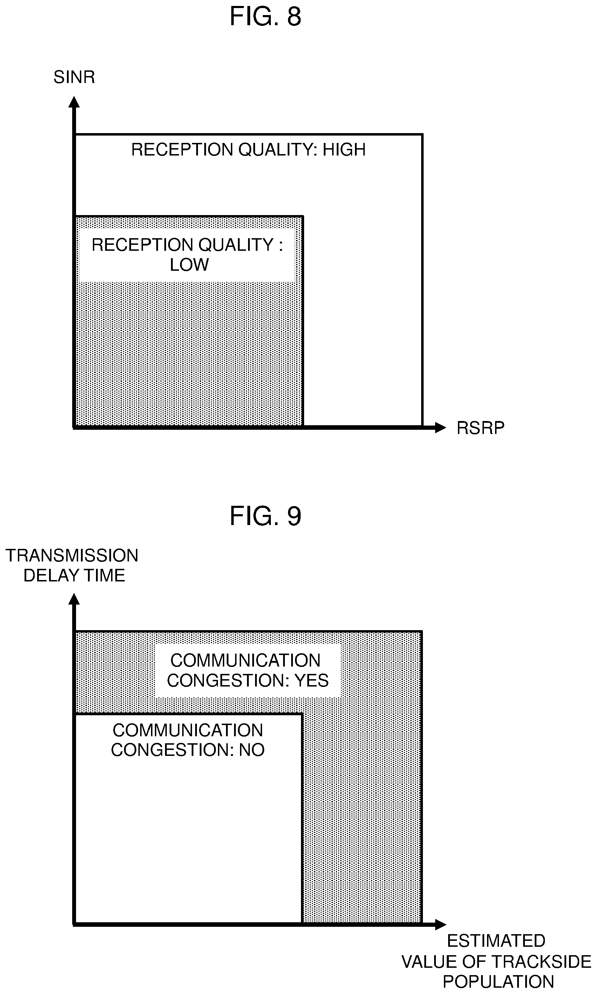

FIG. 8 shows a method for determining the reception quality in the communication quality determination unit 303.

Here, the communication quality determination unit 303 determines the reception quality based on the relationship between the RSRP and the SINR. The communication quality determination unit 303 determines whether the RSRP and the SINR reach a predetermined level. Specifically, the communication quality determination unit 303 provides a predetermined threshold for the RSRP and the SINR, and determines "reception quality: high" when any one of the RSRP and the SINR exceeds the threshold. On the other hand, when the RSRP and the SINR are both equal to or less than the threshold, "reception quality: low" is determined.

FIG. 9 shows a method for determining the communication congestion in the communication quality determination unit 303.

Here, the communication quality determination unit 303 indicates that the communication congestion is determined based on the relationship between the transmission delay time and the estimated value of trackside population. The communication quality determination unit 303 determines whether the transmission delay time and the estimated value of trackside population reach a predetermined level. Specifically, the communication quality determination unit 303 provides a predetermined threshold for the transmission delay time and the estimated value of trackside population, and determines "communication congestion: yes" when any one of the transmission delay time and the estimated value of trackside population exceeds the threshold. On the other hand, when the transmission delay time and the estimated value of trackside population are both equal to or less than the threshold, "communication congestion: no" is determined.

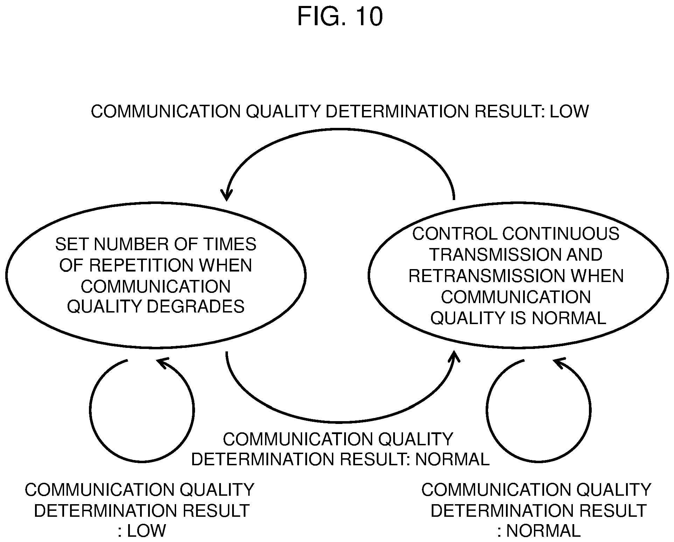

FIG. 10 shows control in a case where the communication quality determination result is in two stages of "low and normal".

FIG. 10 is a state transition diagram of wireless communication when the communication control unit 302 controls wireless communication according to the communication quality determination result of the communication quality determination unit 303.

The communication quality determination unit 303 notifies the communication control unit 302 of the communication quality determination result according to a predetermined time interval. The communication control unit 302 that receives the notification notifies the communication requirement management unit 301 of low or normal as the communication quality determination result, and performs wireless communication according to the predetermined number of times of repetition output from the communication requirement management unit 301. For example, when the communication quality is normal, upon receiving a result indicating that the communication quality is "normal" from the communication quality determination unit 303, the communication control unit 302 continues the normal number of times of repetition. On the other hand, when the communication quality is normal, when the communication control unit 302 receives a result that the communication quality is "low" from the communication quality determination unit 303, the communication control unit 302 cross-references the communication requirement management unit 301, acquires a control parameter when the communication quality is "low", and controls wireless communication by the acquired number of times of repetition.

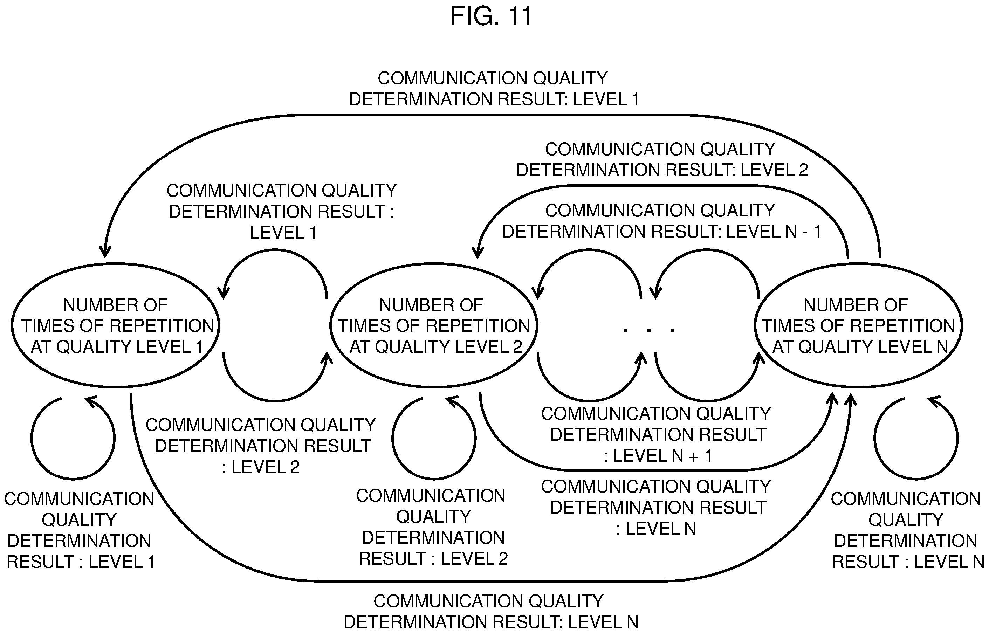

FIG. 11 shows control in a case where the communication quality determination result is in N stages of "levels 1, 2,..., N". Here, as N increases, the communication quality increases, and as N decreases, the communication quality decreases.

FIG. 11 is a state transition diagram of wireless communication when the communication control unit 302 controls wireless communication according to the communication quality determination result of the communication quality determination unit 303.

The communication quality determination unit 303 notifies the communication control unit 302 of the communication quality determination result according to the predetermined time interval. The communication control unit 302 that receives the notification notifies the communication requirement management unit 301 of any of levels, 1, 2,..., N as the communication quality determination result, and performs wireless communication according to the predetermined number of times of repetition output from the communication requirement management unit 301. For example, when the communication quality is level 2, upon receiving a result indicating that the communication quality is "level 2" from the communication quality determination unit 303, the communication control unit 302 continues the number of times of repetition of level 2. On the other hand, when the communication quality is level 2, when the communication control unit 302 receives a result that the communication quality is "level 1" from the communication quality determination unit 303, the communication control unit 302 cross-references the communication requirement management unit 301, acquires a control parameter when the communication quality is "level 1, and controls wireless communication by the acquired number of times of repetition.

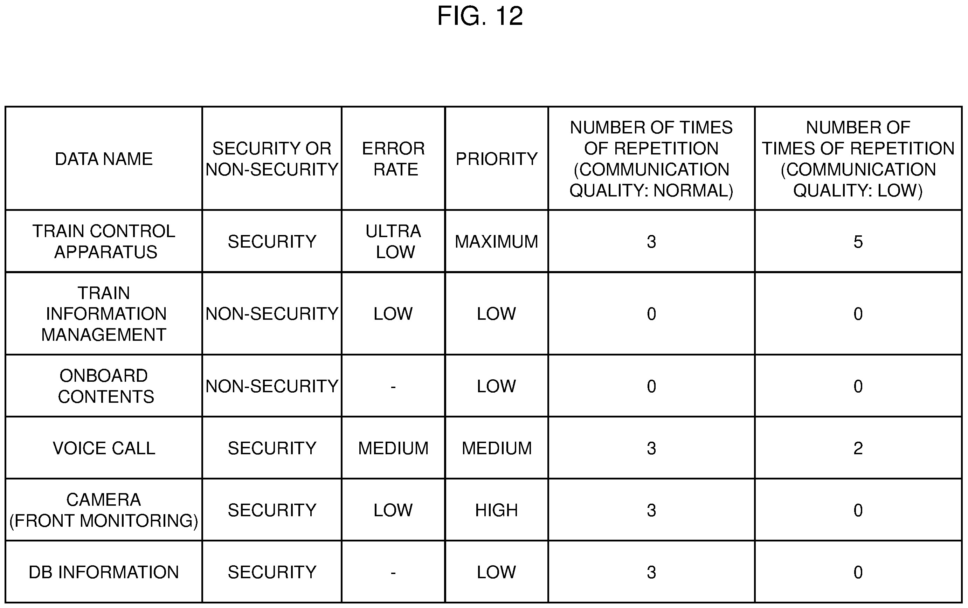

FIG. 12 shows a data structure of the communication requirement management unit 301 when the communication quality determination result is in the two stages of "low and normal" and wireless communication control is performed as shown in FIG. 10.

The communication requirement management unit 301 manages, for a data name, being security information or not, error rate, a priority, and the number of times of repetition with respect to the communication quality determination result in the two stages of "low and normal". For example, data of the train control apparatus is "security information", and the error rate thereof is required to be "ultra low". The priority is "highest", and the number of times of repetition of transmission is three when the communication quality is "normal", and is five when the communication quality is "low". When the number of times is zero, it is indicated that no continuous transmission or retransmission is performed for the information. That is, the number of times of transmission for the information is only once, namely an initial attempt. When the number of times is three, it is indicated that the upper limit number of times of continuous transmission or retransmission is three. That is, the information can be transmitted up to four times including transmission of an initial attempt.

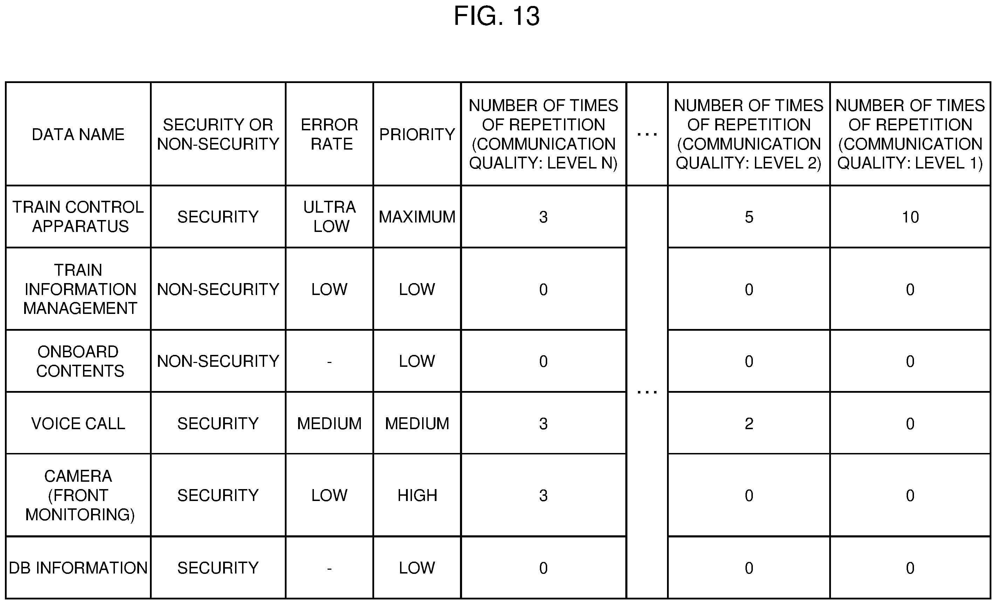

FIG. 13 shows the data structure of the communication requirement management unit 301 when the communication quality determination result is in the N stages of "levels 1, 2,..., **N"** and wireless communication control is performed as shown in FIG. 11. Here, as N increases, the communication quality increases, and as N decreases, the communication quality decreases.

The communication requirement management unit 301 manages, for a data name, being security information or not, error rate, a priority, and the number of times of repetition with respect to the communication quality determination result in the N stages of "levels, 1, 2,..., N". For example, the data of the train control apparatus is "security information", and the error rate thereof is required to be "ultra low". The priority is "highest", and the number of times of repetition of transmission is three when the communication quality is "level N". Further, the number of times of repetition of transmission is five when the communication quality is "level 2", and is ten when the communication quality is "level 1".

As shown in FIGS. 12 and 13, when the quality of the wireless communication degrades, the communication requirement management unit 301 sets the number of times of repetition for each of types of the security information and the non-security information according to a priority determined based on the corresponding type. When the quality of the wireless communication degrades, the communication requirement management unit 301 sets the number of times of repetition for the security information to be larger than the number of times of repetition for the non-security information. Further, when the quality of the wireless communication degrades, the communication requirement management unit 301 increases the number of times of repetition based on the type of the security information. Furthermore, when the quality of the wireless communication degrades, the communication requirement management unit 301 decreases the number of times of repetition for the non-security information.

When the quality of the wireless communication is restored to a predetermined level, the communication requirement management unit 301 may return the number of times of repetition of the transmission for each of the security information and the non-security information to a predetermined initial number of times.

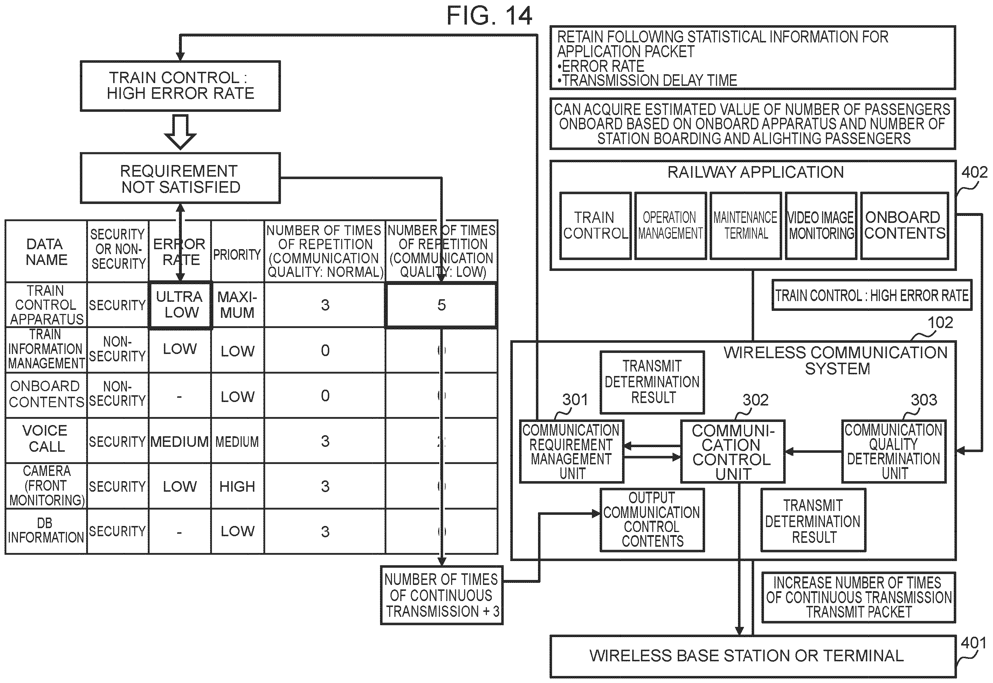

FIG. 14 shows a control flow in a case where the number of times of repetition of application communication is dynamically changed in a configuration in which communication quality is estimated based on a parameter acquired from the railway application 402.

FIG. 14 shows a control example when the data of the train control apparatus does not satisfy a communication requirement of an application in the communication requirement management unit 301. In this case, the wireless communication system 102 acquires a parameter indicating "high error rate" from the railway application 402. Then, the communication requirement management unit 301 compares the parameter with the communication requirement of the corresponding communication application. In this case, since the parameter exceeds an error rate requirement "ultra low", the communication requirement management unit 301 determines that the communication quality is not sufficient, and increases the number of times of repetition by three. That is, the number of times of repetition is eight. Then, the communication requirement management unit 301 outputs the increased number of times of repetition. The communication control unit 302 controls wireless communication according to the increased number of times of repetition. In this case, when the quality of the wireless communication does not reach a predetermined level, the communication requirement management unit 301 performs processing to further increase the predetermined number of times of repetition.

In the communication control system S described above in detail, a case where wireless communication is performed at a railway such as between the ground equipment 101 and the train 106 has been described, but the invention is not limited thereto. For example, the moving object is not limited to the train 106, and may be any moving object requiring the security information. Examples of the moving object include a ship and an aircraft. The invention may also be applied to self-driving of an automobile. The wireless communication may also be performed between two parties at least one of which is a moving object. That is, the two parties may both be moving objects. For example, the communication control system S described above is also applicable to a case where wireless communication (satellite communication) is performed between a satellite and the train 106.

According to the wireless communication system 102 described in detail above, wireless communication for both the security information and the non-security information can be performed and stable wireless communication can be ensured for the security information. That is, even when the non-security information such as content information is transmitted through wireless communication, the security information can be reliably transmitted. Thus, safety of the moving object such as the train 106 can be ensured.

### <Description of Wireless Communication Method>

Here, processing performed by the wireless communication system 102 can be regarded as a wireless communication method including: a setting unit configured to set, when wireless communication is performed between two parties at least one of which is a moving object, the number of times of repetition of transmission for each of security information and non-security information that is information other than the security information, according to quality of the wireless communication; and a control unit configured to control the wireless communication according to the set number of times of repetition.

Although the embodiment is described above, the technical scope of the invention is not limited to the scope described in the above embodiment. It is evident from the description of the claims that various modifications or improvements made to the above embodiment are also included within the technical scope of the invention.

### Reference Signs List

- 101: ground equipment
- 102, 107: wireless communication system
- 103, 104: RAN
- 106: train
- 108: onboard apparatus
- 109: onboard control unit
- 301: communication requirement management unit
- 302: communication control unit
- 303: communication quality determination unit
- 401: wireless base station or wireless terminal
- 402: railway application
- S: communication control system

## Claims

1. A wireless communication system comprising:
a setting unit configured to set, when wireless communication is performed between two parties at least one of which is a moving object, the number of times of repetition of transmission for each of security information and non-security information that is information other than the security information, according to quality of the wireless communication; and
a control unit configured to control the wireless communication according to the set number of times of repetition.

2. The wireless communication system according to claim 1, wherein
when the quality of the wireless communication degrades, the setting unit sets the number of times of repetition for each of types of the security information and the non-security information according to a priority determined based on the corresponding type.

3. The wireless communication system according to claim 2, wherein
when the quality of the wireless communication degrades, the setting unit sets the number of times of repetition for the security information to be larger than the number of times of repetition for the non-security information.

4. The wireless communication system according to claim 2, wherein
when the quality of the wireless communication degrades, the setting unit increases the number of times of repetition for the security information.

5. The wireless communication system according to claim 4, wherein
when the quality of the wireless communication does not reach a predetermined level, the setting unit further increases the predetermined number of times of repetition.

6. The wireless communication system according to claim 2, wherein
when the quality of the wireless communication degrades, the setting unit decreases the number of times of repetition for the non-security information.

7. The wireless communication system according to claim 2, wherein
when the quality of the wireless communication is restored to a predetermined level, the setting unit returns the number of times of repetition of the transmission for each of the security information and the non-security information to a predetermined initial number of times.

8. The wireless communication system according to claim 2, wherein
the number of times of repetition is an upper limit number of times of continuous transmission or retransmission.

9. The wireless communication system according to claim 1, wherein
the quality of the wireless communication is determined based on at least one of reception quality of the wireless communication and communication congestion.

10. The wireless communication system according to claim 9, wherein
the reception quality is estimated based on a relationship between reference signal received power (RSRP) and a signal to interference and noise power ratio (SINR).

11. The wireless communication system according to claim 10, wherein
at least one of the RSRP and the SINR is acquired from at least one of a wireless base station and a wireless terminal.

12. The wireless communication system according to claim 9, wherein
the communication congestion is estimated based on a relationship between a transmission delay time and an estimated value of trackside population.

13. The wireless communication system according to claim 12, wherein
the transmission delay time is acquired from application software for the moving object.

14. A wireless communication method comprising:
a setting unit configured to set, when wireless communication is performed between two parties at least one of which is a moving object, the number of times of repetition of transmission for each of security information and non-security information that is information other than the security information, according to quality of the wireless communication; and
a control unit configured to control the wireless communication according to the set number of times of repetition.

15. A communication control system for performing wireless communication between two parties at least one of which is a moving object, wherein
at least one of the two parties includes
a setting unit configured to set the number of times of repetition of transmission for each of security information and non-security information that is information other than the security information, according to quality of the wireless communication, and
a control unit configured to control the wireless communication according to the set number of times of repetition.
